# EUROPÄISCHE PATENTANMELDUNG

(11) **EP 1 099 500 A2**
(43) Veröffentlichungstag der Anmeldung: **16.05.2001**
(21) Anmeldenummer: 00121910.4
(22) Anmeldetag: 07.10.2000
(51) Int. Cl.: B23B 27/08

(54) **Halter für eine Schneidplatte**

(30) Priorität: 11.10.1999 DE 19948911
(71) Anmelder: Neumann, Volker, 42369 Wuppertal (DE)
(72) Erfinder: Neumann, Volker, 42369 Wuppertal (DE)
(74) Vertreter: Grundmann, Dirk, Dr.

(57) **Zusammenfassung**

Die Erfindung betrifft einen Halter (1) für eine Schneidplatte (2), welche zwischen einem die Schneidkräfte aufnehmenden Lager (6) und Widerlager (7) zufolge einer aufgebrachten Spannkraft gehalten ist. Damit der Einsatz einer Spannpratze nicht erforderlich ist, schlägt die Erfindung vor, daß die gegen Lager (6) und Widerlager (7) wirkenden Kräfte im wesentlichen ausschließlich aus der Schneidkraft resultieren und die Spannkraft dazu quergerichtet ist.

## Beschreibung

Die Erfindung betrifft einen Halter für eine Schneidplatte, welche zwischen einem die Schneidkräfte aufnehmenden Lager und Widerlager zufolge einer aufgebrachten Spannkraft gehalten ist.

Ein derartiger eine Schneidplatte aufnehmender Halter für die spanabhebende Bearbeitung ist bekannt aus der DE 20 00 945 B2, wobei das Lager von einer zur Halterstirnfläche schräg ansteigenden, ausgekehlten Stützfläche gebildet wird, in welche formpassend die zugekehrte Schmalfläche der Schneidplatte eintaucht. Als Widerlager dient ein die Schneidplatte teilflächig übergreifender Bund einer mit einem stiftförmigen Schaft ausgestatteten Spannpratze, auf welche eine Stiftschraube einwirkt.

Dem Gegenstand der Erfindung liegt die Aufgabe zugrunde, einen Halter der in Rede stehenden Art in herstellungstechnisch einfacher Weise so auszugestalten, daß der Einsatz einer Spannpratze nicht erforderlich ist.

Gelöst ist diese Aufgabe zunächst und im wesentlichen bei einem Halter mit den Merkmalen des Anspruchs 1, wobei darauf abgestellt ist, daß die gegen Lager und Widerlager wirkenden Kräfte im wesentlichen ausschließlich aus der Schneidkraft resultieren und die Spannkraft dazu quergerichtet ist.

Zufolge derartiger Ausgestaltung ist ein Halter für eine Schneidplatte für die spanabhebende Bearbeitung geschaffen, der einerseits einfach in seinem Aufbau ist und andererseits die Schneidplatte fesselt. Die gegen das Lager und das Widerlager wirkenden Kräfte resultieren im wesentlichen nun ausschließlich aus der Schneidkraft. Das bedeutet, daß mit der Zunahme der auf die Schneidplatte wirkenden Schneidkraft die auf das Lager und Widerlager wirkende Stützkraft größer wird. Es kann nicht geschehen, daß die Schneidplatte aus ihrer bestimmungsgemäßen Lage gelangt. Die Spannkraft dagegen ist quer zur Schneidkraft gerichtet und dient hauptsächlich zur auf die Breitseitenflächen wirkenden klemmenden Halterung der Schneidplatte. Der einfache Aufbau gestattet sodann eine kurzfristige Montage, da auf den Einsatz einer gewindeverlagerbaren Spannpratze verzichtet ist. Eine vorteilhafte Weiterbildung ist darin zu sehen, daß die Schneidplatte in einem stirnrandseitig offenen Schacht des Halters sitzt. Dieser Schacht ist als in der Schneidebene liegender, stirnrandseitig offener Schlitz gestaltet und daher kurzfristig zu fertigen. Spezielle Ausfräsungen am Halter sind demgemäß nicht erforderlich, welche Ausfräsungen zu einer Verteuerung des Halters führen. Eine Doppelfunktion erfüllt das Lager dadurch, daß sich die Schneidplatte gegen ein die Spannkraft erzeugendes Spannelement abstützt. Im Detail sieht dies so aus, daß das Spannelement eine den Schacht kreuzende Schraube ist. Diese stellt das Lager dar und erzeugt bei ihrem Anziehen die quer zur Schneidkraft gerichtete Spannkraft. Optimal ist die Abstützung der Schneidplatte an der Schraube dadurch, daß das Lager ein gewindefreier Abschnitt der Schraube ist. Bei dem Anziehen der Schraube nach dem Einlegen der Schneidplatte übt eine der beiden Schachtseitenwände die Spannfunktion aus. Für das Widerlager ist ebenfalls ein einfaches Bauteil verwendet, und zwar ist hierfür ein den Schacht kreuzender Stift eingesetzt. Die Abstützung der Schneidplatte bei Schneidbelastung wird günstigst dadurch aufgenommen, daß das Widerlager, von der Schneide aus gesehen, rückwärtig zum Lager versetzt angeordnet ist. Um die Schneidplatte als Wendeplatte einsetzen zu können, besitzt die Schneidplatte eine Trapezform mit der Basis gegenüberliegender Lagerausnehmung. Nach Abnutzen der Schneide kann dann nach Lösen der Schraube die Schneidplatte dem Schacht unter leichtem Verschwenken entnommen und nach Wenden um 180° wieder in die vorschriftsmäßige Position gebracht werden, so daß dann die unbenutzte Schneide zum Einsatz gelangen kann. Als materialsparend erweist sich die Maßnahme, daß das Widerlager im Bereich eines Vorsprunges der Schachtseitenwände liegt. Der Halter braucht demgemäß nicht über seine volle Länge den Querschnitt einzunehmen wie im Bereich des Vorsprunges der Schachtseitenwände. Hervorzuheben ist ferner die Tatsache, daß das Lager und das Widerlager höhenversetzt zueinanderliegen. Schließlich besteht ein vorteilhaftes Merkmal noch darin, daß eine, vorzugsweise die dünnere Schacht seitenwand den Schraubenkopf und die andere den Gewindeschacht der Schraube aufnimmt. Aufgrund einer gewissen Elastizität der dünneren Schachtseitenwand wird diese beim Anziehen der Schraube gegen die zugekehrte Breitseitenfläche der Schneidplatte gedrückt, wodurch diese ihre Fixierung erhält.

Nachstehend wird ein Ausführungsbeispiel der Erfindung anhand der Zeichnungen erläutert. Es zeigt:
- Fig. 1: Eine perspektivische Darstellung eines eine Schneidplatte aufnehmenden Halters,
- Fig. 2: den Schnitt nach der Linie II-II in Fig. 1 und
- Fig. 3: den Schnitt nach der Linie III-III in Fig. 2.

Mit der Ziffer 1 ist als Ganzes ein Halter für eine Schneidplatte 2 bezeichnet. Der Halter 1 besitzt ein im Querschnitt rechteckiges Profil und besteht aus Stahl. Von der Stirnseite des Halters 1 ist ein Schacht 3 eingearbeitet. Dieses kann beispielsweise mittels eines Scheibenfräsers geschehen. Durch das Einschneiden des Schachtes 3 werden zwei Schachtseitenwände 4 und 5 gebildet derart, daß die Dicke der Schachtseitenwand 4 ein Mehrfaches der Schachtseitenwand 5 ist. Die Breite des Schachtes 4 entspricht der Dicke der Schneidplatte 2.

Die auf die Schneidplatte 2 in Pfeilrichtung x einwirkende 1 Schneidkraft wird von einem Lager 6 und einem Widerlager 7 aufgenommen. Bezüglich des Lagers 6 handelt es sich um einen gewindefreien Abschnitt einer den Schacht 3 kreuzenden Schraube 8. Diese stellt das Spannelement dar, welche die zur Schneidkraft quergerichtete Spannkraft aufbringt. Der Schraubenkopf 9 der Schraube 8 wird von der dünneren Schachtseitenwand 5 aufgenommen. An diesen Schraubenkopf 9 schließt sich der gewindefreie Abschnitt bzw. das Lager 6 an. Das Lager 6 setzt sich fort in einen Gewindeschaft 10, welcher in das Innengewinde 11 der anderen Schachtseitenwand 4 eingreift. Beim Ausführungebeispiel ist der Schraubenkopf 9 als Senkkopf gestaltet, der formschlüssig in einer Senkbohrung 12 der Schachtseitenwand 5 einliegt. Die Senkbohrung 12 setzt sich fort in einen Bohrungsabschnitt 13, welcher durchmessergrößer ist als der Gewindeschaft 10, so daß das problemlose Eindrehen der Schraube 8 gewährleistet ist.

Bezüglich des Widerlagers 7 handelt es sich um einen den Schacht 3 kreuzenden Stift. Dieser bzw. das Widerlager ist, von der Schneide 14 der Schneidplatte 2 aus gesehen, rückwärtig zum Lager 6 angeordnet. Ferner erstreckt sich das Widerlager 7 im Bereich eines Vorsprunges 15 der Schachtseitenwände 4, 5. Sodann sind das Lager 6 und das Widerlager 7 höhenversetzt zueinander angeordnet, derart daß das Widerlager 7 oberhalb des Lagers 6 gemäß zeichnerischer Darstellung vorgesehen ist. Dabei tangiert das Widerlager 7 die Oberkante des Halters 1.

Die Schneidplatte 2 ist ihrerseits in Trapezform erstellt. Der Basis 17 dieser Trapezform liegt die parallel verlaufende Trapezfläche 18 gegenüber, welche eine etwa halbkreisförmige Lagerausnehmung 19 besitzt. Deren Durchmesser ist demjenigen des gewindefreien Abschnittee bzw. des Lagers 6 angepaßt.

Die Enden der Basis 17 bilden in Verbindung mit den Trapezseitenflächen 20 die Schneiden 14, 14', so daß hierdurch eine umwendbare Schneidplatte 2 realisiert ist. Es liegt also ein symmetrischer Aufbau der Schneidplatte 2 vor. In eingesetztem Zustand der Schneidplatte 2 stützt sich die Basis 17 an dem stiftförmigen Widerlager 7 und die Lagerausnehmung 19 an dem Lager 6 ab. Die eingesetzte Lage wird durch die von der Schraube 8 aufgebrachte Spannkraft gesichert, wobei die dünnere Schachtseitenwand 5 aufgrund einer gewissen Federung die Spannfunktion ausübt.

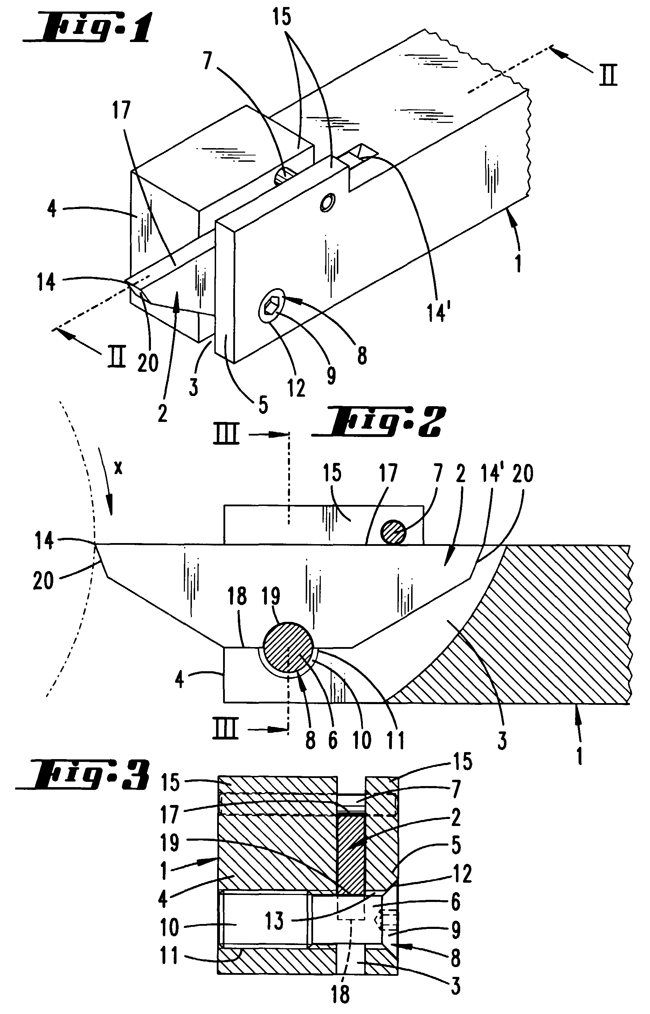

Wie Fig. 2 veranschaulicht, resultieren die gegen das Lager 6 und das Widerlager 7 wirkenden Kräfte im wesentlichen ausschließlich aus der in Pfeilrichtung x wirkenden Schneidkraft, während die auf die Schneidplatte 2 wirkende Spannkraft dazu quergerichtet verläuft.

Sollte die über die Halterstirnfläche vorstehende Schneide 14 abgenutzt sein, so läßt sich die Schneidplatte 2 um 180° wenden und zwar nach Lösen der Spannschraube 8, Verschwenken der Schneidplatte 2 in Uhrzeigerrichtung mit anschließendem Herausziehen der Schneidplatte. Nachdem diese um 180° gewendet ist, kann der Einbau in umgekehrter Reihenfolge durchgeführt werden. Das Fixieren der sich an Lager 6 und Widerlager 7 abstützenden Schneidplatte 2 geschieht dann durch Anziehen der Schraube 8.

Eine Alternative wäre möglich, das Widerlager 7 mit einem exzentrischen Abschnitt auszustatten, um durch Drehverlagerung des Exzenters eine Einstellbarkeit der Schneide zu ermöglichen.

Alle offenbarten Merkmale sind erfindungswesentlich. In die Offenbarung der Anmeldung wird auch der Offenbarungsinhalt der zugehörigen Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Halter (1) für eine Schneidplatte (2), welche zwischen einem die Schneidkräfte aufnehmenden Lager (6) und Widerlager (7) zufolge einer aufgebrachten Spannkraft gehalten ist, dadurch gekennzeichnet, daß die gegen Lager (6) und Widerlager (7) wirkenden Kräfte im wesentlichen ausschließlich aus der Schneidkraft resultieren und die Spannkraft dazu quergerichtet ist.

2. Halter nach einem oder mehreren der vorhergehenden Ansprüche oder insbesondere danach, dadurch gekennzeichnet, daß die Schneidplatte (2) in einem stirnrandseitig offenen Schacht (3) des Halters (1) sitzt.

3. Halter nach einem oder mehreren der vorhergehenden Ansprüche oder insbesondere danach, dadurch gekennzeichnet, daß sich die Schneidplatte (2) gegen ein die Spannkraft erzeugendes Spannelement abstützt.

4. Halter nach einem oder mehreren der vorhergehenden Ansprüche oder insbesondere danach, dadurch gekennzeichnet, daß das Spannelement eine den Schacht (3) kreuzende Schraube (8) ist.

5. Halter nach einem oder mehreren der vorhergehenden Ansprüche oder insbesondere danach, dadurch gekennzeichnet, daß das Lager (6) ein gewindefreier Abschnitt der Schraube (8) ist.

6. Halter nach einem oder mehreren der vorhergehenden Ansprüche oder insbesondere danach, dadurch gekennzeichnet, daß eine der beiden Schachtseitenwände (4, 5) eine Spannfunktion ausübt.

7. Halter nach einem oder mehreren der vorhergehenden Ansprüche oder insbesondere danach, dadurch gekennzeichnet, daß das Widerlager (7) ein den Schacht (3) kreuzender Stift ist.

8. Halter nach einem oder mehreren der vorhergehenden Ansprüche oder insbesondere danach, dadurch gekennzeichnet, daß das Widerlager (7), von der Schneide (14) aus gesehen, rückwärtig zum Lager (6) versetzt angeordnet ist.

9. Halter nach einem oder mehreren der vorhergehenden Ansprüche oder insbesondere danach, dadurch gekennzeichnet, daß die Schneidplatte (2) eine Trapezform besitzt mit der Basis (17) gegenüberliegender Lagerausnehmung (19).

10. Halter nach einem oder mehreren der vorhergehenden Ansprüche oder insbesondere danach, dadurch gekennzeichnet, daß das Widerlager (7) im Bereich eines Vorsprunges (15) der Schachtseitenwände (4, 5) liegt.

11. Halter nach einem oder mehreren der vorhergehenden Ansprüche oder insbesondere danach, dadurch gekennzeichnet, daß das Lager (6) und das Widerlager (7) höhenversetzt zueinanderliegen.

12. Halter nach einem oder mehreren der vorhergehenden Ansprüche oder insbesondere danach, dadurch gekennzeichnet, daß eine, vorzugweise die dünnere Schachtseitenwand (5) den Schraubenkopf (9) und die andere den Gewindeschacht (10) der Schraube (8) aufnimmt.
